# EUROPEAN PATENT SPECIFICATION

(11) **EP 4 373 717 B1**
(45) Date of publication and mention of the grant of the patent: **03.09.2025**
(21) Application number: 22754520.9
(22) Date of filing: 21.07.2022
(51) Int. Cl.: B60S 9/18, B65B 11/02

(54) **SELF-PROPELLED WRAPPING MACHINE**
SELBSTFAHRENDE WICKELMASCHINE
MACHINE D'EMBALLAGE AUTOPROPULSÉE

(30) Priority: 23.07.2021 IT 202100019667
(43) Date of publication of application: 29.05.2024
(73) Proprietor: Robopac S.p.A., 47892 Acquaviva Gualdicciolo (SM)
(72) Inventor: MORRI, Marco, 47892 Gualdicciolo (SM)
(74) Representative: Cicconetti, Andrea
(86) International application number: PCT/IB2022/056743
(87) International publication number: WO 2023/002425

(56) References cited:
- IT-A1- MI20 090 068
- US-A1- 2007 169 442
- ROBOPAC S.P.A: "Self propelled wrapping robot S6, Use and maintenance manual", 21 March 2017 (2017-03-21), XP055905084, Retrieved from the Internet <URL:https://robopacusa.com/wp-content/uploads/2020/05/Robot-S6-User-Manual.pdf> [retrieved on 20220324]

## Description

The invention relates to a mobile or self-propelled wrapping machine configured to wrap a film made of plastic material around a load consisting of a product or a group of products arranged on a bed or pallet.

Self-propelled wrapping machines, also referred to as self-propelled wrapping robots, are machines generally used to wrap loads having variable shapes and sizes and in productions in limited amounts, typically in environments or accommodations where fixed or static wrapping machines cannot be used because of their overall dimensions and/or the available spaces. Loads are generally formed by bend or pallets on which a group of more or less regularly overlapped products and/or objects, even having different sizes and shapes, is arranged.

In other cases, the wrapping, normally for protective purposes, directly concerns the product, which is generally large-sized.

The self-propelled wrapping machines include a cart or carriage that supports a vertical upright along which a film unwinding or supplying unit, which houses a reel of plastic film and is generally provided with a plurality of rollers for unwinding and pre-stretching the film, is movable with alternating rectilinear motion. The carriage is usually provided with rear wheels, at least one of which is a motorized drive wheel and a front steering device which comprises one or more steering wheels, operated by a steering. The steering can be operated by means go a manoeuvring bar by an operator to manually move the machine in a manoeuvring configuration, or from by means of a feeler element capable of following the profile or external shape of the load in an operating working configuration, in which the self-propelled machine turns autonomously and automatically around the load to wrap it with the film.

The combination of the alternating linear movement of the unwinding unit along the vertical upright and the rotation of the self-propelled machine around the load allows the film to be wrapped around the load so as to form a series of intertwined strips or bands. The plastic film is wrapped to completely bind up the load on all its sides.

For such self-propelled wrapping machines, the problem of their displacement in the manoeuvring configuration is known. In particular, the drive wheel or wheels resist the movement imposed by the operator wishing to move the wrapping machine, for example from a first wrapped load to a further load to be wrapped.

A solution proposed in the prior art is to provide for the uncoupling of the drive wheel from the drive motor by means of mechanical systems, so as to make the drive wheel idle during the movement steps, thus allowing the operator to easily move the wrapping machine.

However, the proposed solution has the disadvantage that the wrapping machines have to include complex and expensive mechanical uncoupling systems of the drive wheel.

ITMI20090068 discloses a self-propelled wrapping machine that comprises a self-propelled carriage provided with two rear wheels, at least one of which is driven by a motor, and a pair of steering wheels mounted idle on a steering body which is rotatable about a vertical pin connected to a manoeuvring bar which can be operated manually by an operator to manoeuvre the wrapping machine. The steering body is associated with a feeler arm, one end of which is fixed to the steering body while the other end is provided with a contact roller which, under the action of respective spring means, abuts the side surface of the load to be wrapped. On the lower end of the vertical pin below the steering body, a manoeuvring wheel is mounted which is free to rotate about the aforesaid vertical pin. The vertical pin can be moved vertically by the manoeuvring bar so as to move the manoeuvring wheel between a raised position in which it is detached from the ground to allow the steered wheels to guide the self-propelled carriage during the operation of the machine, and a lowered position in which the manoeuvring wheel rests on the ground and lifts the steering wheels to allow the manual movement of the machine. More precisely, the pin is moved from the raised position to the lowered position by moving the manoeuvring bar from a vertical position to a horizontal position. Thereby, the wrapping machine can be easily moved manually without the need to steer the steering wheels and thus to overcome the resistance of the spring means acting on the steering body. To further facilitate the manual movement, the wrapping machine also includes a system adapted to uncouple the motor from the drive wheel.

The document "Self propelled wrapping robot S6, Use and maintenance manual", 21 March 2017, Retrieved from the Internet, URL: https://robopacusa.com/wp-content/uploads/2020/05/Robot-S6-User-Manual.pdf [retrieved on 2022-03-24] discloses the preamble of claim 1.

An object of the invention is to improve the known self-propelled wrapping machines arranged to wrap a load with an extensible plastic film.

Another object is to provide a self-propelled wrapping machine which can be easily and handy moved and displaced by an operator in a manoeuvring configuration, outside the operating wrapping cycles.

A further object is to carry out a wrapping machine having a safe and reliable operation and low production cost.

The invention provides a self-propelled wrapping machine according to independent claim 1.

The self-propelled wrapping machine of the invention is movable on a supporting surface to wrap a load with a plastic film and comprises a self-propelled carriage provided with at least one drive wheel suitable for moving the self-propelled wrapping machine, an upright fixed to the carriage and slidably supporting an unwinding unit provided with at least a reel of film, and at least one lifting device which includes a supporting element provided with an idle auxiliary wheel; the supporting element is associated with the carriage and is selectively movable between a lowered position, in which the auxiliary wheel abuts the supporting plane and lifts and detaches the drive wheel from the supporting plane, and a raised position, in which the auxiliary wheel is spaced from the supporting plane. The supporting element is rotatably associated with a side of the carriage, adjacent to the drive wheel so as to rotate between the raised position and the lowered position.

The lifting device comprises a lever rotatably supported by the carriage and connected to the supporting element, which is movable between an operating position, in which it arranges the supporting element in the lowered position, and a non-operating position, in which the lever arranges the supporting element in the raised position. A connecting element connects the lever and the supporting element.

Advantageously, the self-propelled wrapping machine according to the invention can be easily and handy moved and displaced by an operator in a manoeuvring configuration, outside operating wrapping cycles. By virtue of the lifting device, it is in fact possible to easily detach the drive wheel from the supporting plane so that the drive wheel does not interfere, by slowing down the manual movement of the machine. In particular, by virtue of the lever that is connected with and acts on the supporting element, the operator has to exert a minimum effort to rotate the lever from the non-operating position to the operating position, i.e. to lift the drive wheel from the supporting surface.

Furthermore, by virtue of the lifting device it is not necessary to include a system in the machine of the invention for mechanically uncoupling the drive wheel from motor means which can be activated during the manoeuvring configuration; thus the machine is very manoeuvrable and easily movable and also less complex and cheaper than the known self-propelled wrapping machines.

The invention can be better understood and implemented with reference to the attached drawings which illustrate an exemplary and non-limiting embodiment thereof, in which:
- figure 1 is a perspective view of the wrapping machine of the invention;
- figure 2 is an enlarged partial view of the wrapping machine of figure 1 with a covering casing in open position in order to illustrate a lifting device of a drive wheel with a supporting element in the raised position;
- figure 3 is a view similar to that of figure 2 which illustrates the supporting element in lowered position.

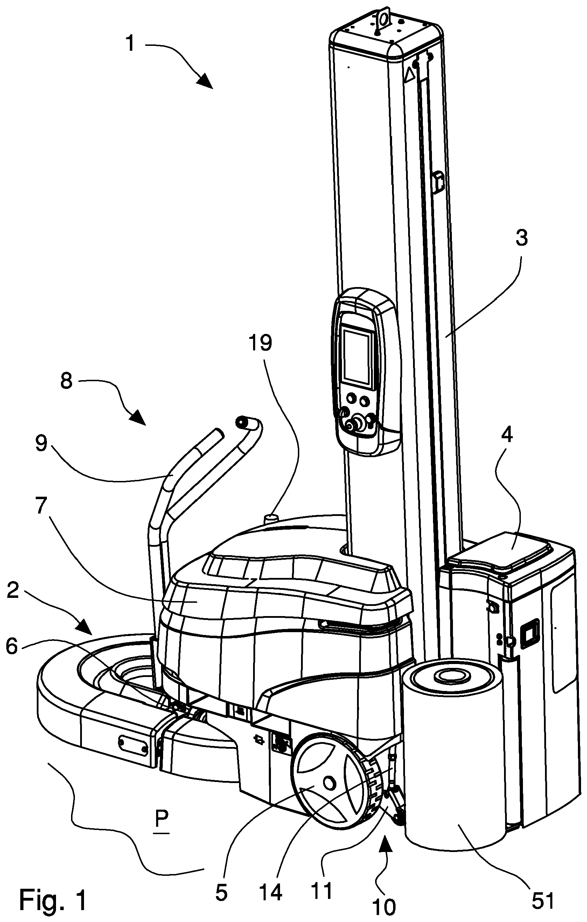

With reference to figures 1 to 3, a self-propelled wrapping machine 1 according to the invention (hereinafter called machine 1) is illustrated that is movable on a supporting plane P around a load to wrap it with a plastic film during a wrapping cycle. The supporting plane P is, for example, identified in the ground or in the floor of the place or environment in which the machine 1 is positioned. The load consists, for example, of one or more products arranged on a pallet or bed.

The machine 1 comprises a self-propelled or mobile carriage 2 and an upright 3 fixed to the carriage and slidably supporting an unwinding unit 4. A covering casing 7 encloses and forms an inner compartment of the carriage intended to receive, for example, an electric power supply battery. The covering casing 7 is movable in open position to allow accessing the inner compartment.

The unwinding unit 4, of the known type, is provided with a reel of film 51, for example of plastic material, and roller means for unwinding and/or pre-stretching the film, of known type and not shown in the figures.

The carriage 2 comprises at least one drive wheel 5 connected with and rotated by motor means of known type and not illustrated in the figures and at least one steering wheel 6 controlled by steering means 8 which can be manually operated by a manoeuvring bar 9 or by a feeler element 19 suitable for following the outer walls of the load to be wrapped. The manoeuvring bar 9 and the feeler element 19 are of known type and thus not described or illustrated in detail.

In the embodiment shown by way of example, the machine 1 comprises a pair of rear wheels of which only one is the drive wheel and a pair of front steering wheels 6 which can be oriented by the operator by means of the manoeuvring bar 9 during manual manoeuvring or by the feeler element during operation, rotating about the load.

The rear drive wheel 5 is positioned on the carriage 2 on the opposite side with respect to the feeler element, of known type and not illustrated, configured to follow the outer profile or shape of the load and orient the steering wheels accordingly, to which it is connected, in an operating work configuration, in which the self-propelled machine rotates autonomously and automatically around the load to wrap it with the film.

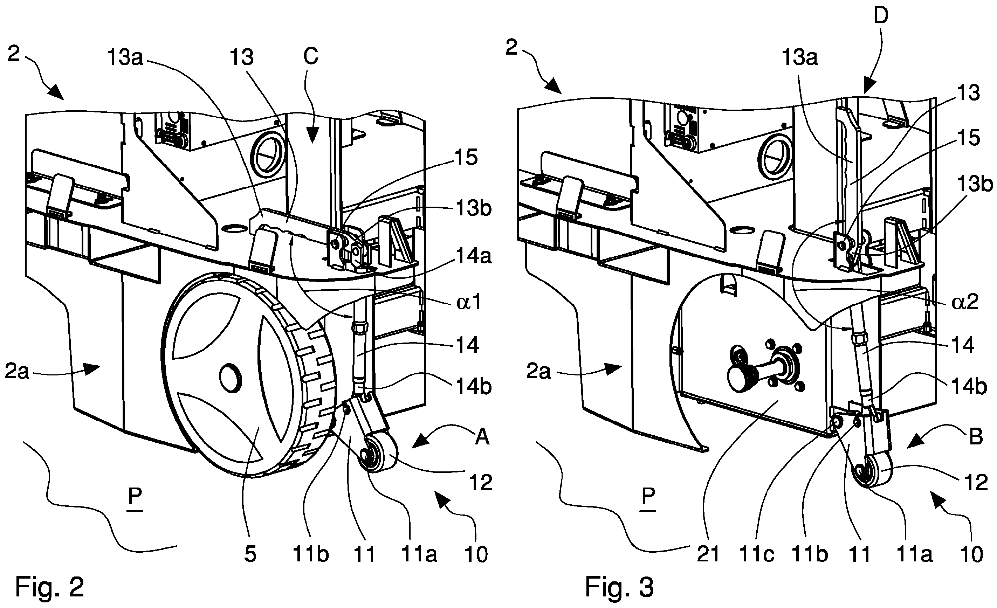

The machine 1 further comprises at least one lifting device 10 which includes a supporting element 11 provided with an auxiliary wheel 12 that is idle, i.e. free to rotate about its own rotation axis, and selectively movable between a raised position A, in which the auxiliary wheel 12 is spaced from the supporting plane P (fig. 2) and a lowered position B, in which the auxiliary wheel 12 abuts the supporting plane P, lifting and detaching the drive wheel 5 from the supporting plane P (fig. 3). More precisely, in the raised position A, the auxiliary wheel 12 is spaced from the supporting plane P so as not to interfere with the movement of the machine 1, leaving the drive wheel 5 in contact with the supporting plane P. In the lowered position B, the auxiliary wheel 12 abuts the supporting plane P and by pushing against the supporting plane P lifts the drive wheel 5 so that the drive wheel is detached from the supporting plane P.

The lifting device 10 is positioned on the carriage 2 at the drive wheel 5 and is accessible for its operation by lifting the covering casing 7 in open position.

The supporting element 11 is associated with a side 2a of the carriage 2 and is adjacent and near the drive wheel 5.

The supporting element 11 is in particular rotatably connected to the carriage 2 so that it can rotate with respect the carriage between the raised position A and the lowered position B.

The lifting device 10 also comprises a lever 13 rotatably supported by the carriage 2 and connected to the supporting element 11. The lever 13 is selectively movable between a non-operating position C, in which the lever 13 arranges the supporting element 12 in the raised position A and an operating position D, in which the lever arranges the supporting element 12 in the lowered position B.

The lever 13 has an elongated shape and has a gripping first portion 13a adapted to be gripped by an operator and an operating second portion 13b connected to the supporting element 11. The lever 13 is rotatably connected to and supported by the carriage 2 at a fulcrum point 15 that is interposed between the first portion 13a and the second portion 13b. More precisely, the fulcrum point 15 divides and defines the first portion 13a and the second portion 13b.

In particular, the first portion 13a is shaped so as to be ergonomically gripped by an operator. According to an embodiment, the first portion 13a may be suitably shaped to facilitate gripping by the operator.

The gripping first portion 13a has a length longer that a length of the operating second portion 13b with reference to the fulcrum point 15, so as to advantageously carry out a lever 13 in which the operator's effort is minimal for changing the position of the supporting element 11, as better explained in the following description.

Furthermore, the lifting device 10 comprises a connecting element 14, suitable for connecting the lever 13 to the supporting element 11. More precisely, the connecting element 14 comprises a first end 14a rotatably connected to an end of the operating second portion 13b of the lever 13 and an opposite second end 14b rotatably connected to the supporting element 11. According to a preferred embodiment of the invention, the connecting element 14 has an elongated shape and is adjustable in length so as to adjustably connect the lever 13 and the supporting element 11. The connecting element 14 is for example a bar, tie rod or strut of cylindrical shape.

The supporting element 11 comprises, for example, a box-like element having an approximately triangular shape provided with a first vertex 11a, a second vertex 11b and a third vertex 11c. At the first vertex 11a, the auxiliary wheel 12 is rotatably connected, that is rotatable about a rotation axis almost parallel to the rotation axis of the drive wheel 5. The second end 14b of the connecting element 14 is rotatably connected to the second vertex 11b. Finally, the third vertex 11c of the supporting element 11 is rotatably connected by a supporting pin to an outer side wall 21 of the carriage 2, near the drive wheel 5.

In a mounting configuration of the supporting element 11 on the carriage 2 (figure 3), the first vertex 11a is closer to the supporting plane P and the second vertex 11b is farther from the supporting plane P.

In a preferred embodiment, the lever 13 in the non-operating position C forms with the connecting element 14 a first angle α1 that is comprised between 80° and 100°, while in the operating position D the lever 13 forms with the connecting element 14 a second angle α2 greater than 180° so as to prevent the spontaneous return of the lever 13 from the operating position D to the non-operating position C. An external force must therefore be applied by an operator to move the lever from the non-operating position C to the operating position D and vice versa.

Locking means, not shown in the figures, are provided for reversibly locking the lever 13 at least in the operating position D so as to prevent the spontaneous movement of the lever from the operating position D to the non-operating position C.

The locking means can be carried out by means of a shaped rotating element positioned near the fulcrum point 15, for example a cam, acting on the end of the second portion 13b of the lever 13.

In the operation of the machine 1 during a load wrapping cycle the lever 13 is positioned in the non-operating position C and the supporting element 11 is arranged in the raised position A, so that the auxiliary wheel 12 is spaced from the supporting plane P and does not interfere with the movement of the machine 1 leaving the drive wheel 5 in contact with the supporting plane P to move the machine 1 around the load.

At the end of the wrapping cycle, if the operator needs to move the machine 1, for example from a first load to a second load, he actuates the first lever 13, in particular, he grips the first portion 13a of the lever 13 by lifting the lever and rotating it with respect to the fulcrum point 15 in order to move the lever from the non-operating position C to the operating position D. The lever 13, by rotating in the operating position D, moves the supporting element 11 from the raised position A to the lowered position B by means of the connecting element 14. During the move from the raised position A to the lowered position B, the auxiliary wheel 12 abuts the supporting plane P and progressively lifts a portion of the carriage 2 at the drive wheel 5 until it detaches the drive wheel from the supporting plane P. In other words, when the supporting element 11 is in the raised position A, the drive wheel 5 is spaced from the supporting plane P and does not interfere with the movement of the machine 1, allowing the operator to easily move and displace the machine, in particular to manually drive the machine into a manoeuvring configuration by means of the manoeuvring bar 8.

It should be noted that since the gripping first portion 13a has a length much longer than the length of second portion 13b with reference to the fulcrum point 15, a lever 13 is carried out in which the operator's effort is minimal for changing the position of the supporting element 11. More precisely, the lever 13 is an advantageous first class lever in which the effort arm (the first portion 13a) that is grasped by the operator has a length longer than the length of the resistance arm (the second portion 13b) connected to the supporting element 11. The force which the operator must exert to lift the lever 13 is thus much lower than the force necessary to lift the drive wheel 5.

When the operator has moved the machine 1, he can act on the lever 13 again to return it from the operating position D to the non-operating position C. At the same time as changing the position of the lever 13, the supporting element 11 is moved from the lowered position B to the raised position A and the auxiliary wheel 12 is lifted from the supporting plane P, allowing the drive wheel 5 to return to abut and rest on the supporting plane P.

The self-propelled wrapping machine according to the invention can therefore be easily and handy moved and displaced by an operator in a manoeuvring configuration, outside operating wrapping cycles.

Thanks to the lifting device 10, it is in fact possible to easily separate the drive wheel 5 from the supporting plane so that drive wheel does not interfere, slowing down the manual movement of the machine 1. In particular, thanks to the shape of the lever 13 (advantageous first class lever) that is connected with and acts on the supporting element 11 through the connecting element 14, the operator has to exert a minimum effort in order to rotate the lever from the non-operating position C to the operating position D, i.e. in order to lift the drive wheel 5 from the supporting plane P.

It should also be noted that, thanks to the lifting device 10 it is not necessary to include a system in the machine 1 of the invention for mechanically uncoupling the drive wheel from the motor means, which has to be activated during the manoeuvring configuration; thus the machine is very manoeuvrable and easily movable and less complex and cheaper than the known self-propelled wrapping machines.

According to an alternative embodiment of the self-propelled wrapping machine 1 of the invention, the carriage 2 may comprise a pair of rear drive wheels 5 and a pair of relative lifting devices 10. In particular, each lifting device 10 is positioned on the body 2 so as to lift the relative drive wheel 5 in a manoeuvring configuration.

According to another embodiment of the invention, the supporting element 11, alternatively to being rotatable, is slidably connected to the carriage 2 so as to be movable linearly between the lowered position B and the raised position A. In this variant, the lifting device 10 comprises driving means, for moving the supporting element 11 between the raised position A and the lowered position B.

For example, the driving means are screw-mother screw means, which transform a rotary motion exerted by the operator into a linear motion of the supporting element 1. The operation of such a preferred embodiment is entirely similar to what has been described above.

According to an alternative embodiment of the invention the connecting element 14 is movable according to a combined motion of roto-translational type.

## Claims

1. Self-propelled wrapping machine (1) movable on a supporting surface (P) to wrap a load with a plastic film, comprising:
- a self-propelled carriage (2) provided with at least one drive wheel (5) suitable for moving said self-propelled wrapping machine (1);
- at least one steering wheel (6) controlled by steering means (8) that can be manually operated by a manoeuvring bar (9) or by a feeler element (19) suitable to follow external walls of the load to be wrapped;
- an upright (3) fixed to said carriage (2) and slidably supporting an unwinding unit (4) provided with at least a reel (51) of film;
- at least one lifting device (10) which includes a supporting element (11) provided with an idle auxiliary wheel (12), said supporting element (11) being associated with said carriage (2) and selectively movable between a raised position (A), in which said auxiliary wheel (12) is spaced from said supporting plane (P), and a lowered position (B), in which said auxiliary wheel (12) abuts said supporting plane (P) and lifts and detaches said drive wheel (5) from said supporting plane (P);
wherein said supporting element (11) is rotatably associated with a side (2a) of said carriage (2), adjacent to said drive wheel (5) so as to rotate between said raised position (A) and said lowered position (B);
**characterized in that** said lifting device (10) comprises:
- a lever (13) rotatably supported by said carriage (2), connected to said supporting element (11) and movable between a non-operating position (C), in which said lever (13) arranges said supporting element (12) in the raised position (A), and an operating position (D), in which said lever (13) arranges said supporting element (12) in the lowered position (B); and
- a connecting element (14) suitable for connecting said lever (13) and said supporting element (11).

2. Self-propelled wrapping machine (1) according to claim 1, wherein said lever (13) has an elongated shape and has a gripping first portion (13a) adapted to be gripped by an operator and an operating second portion (13b) that is connected to said supporting element (11), said lever (13) being rotatably connected to, and supported by, said carriage (2) at a fulcrum point (15) that is interposed between said first portion (13a) and said second portion (13b).

3. Self-propelled wrapping machine (1) according to claim 2, wherein said gripping first portion (13a) has a length longer than the length of said operating second portion (13b).

4. Self-propelled wrapping machine (1) according to claim 2 or 3, wherein said connecting element (14) comprises a first end (14a) rotatably connected to an end of said operating second portion (13b) of said lever (13) and an opposite second end (14b) rotatably connected to said supporting element (11).

5. Self-propelled wrapping machine (1) according to any preceding claim, wherein said connecting element (14) has an elongated shape and is adjustable in length.

6. Self-propelled wrapping machine (1) according to any preceding claim, wherein said lever (13) forms a first angle (α1) with said connecting element (14) in said non-operating position (C) that is comprised between 80° and 100° and in said operating position (D) forms a second angle (α2) wider than 180°.

7. Self-propelled wrapping machine (1) according to any preceding claim, wherein said lifting device (10) comprises locking means configured to reversibly lock said lever (13) at least in said operating position (D).

8. Self-propelled wrapping machine (1) according to any preceding claim, wherein said carriage (2) comprises two drive wheels (5) and two lifting devices (10), each lifting device being associated with a respective drive wheel (5) in order to lift and detach said drive wheel from the supporting plane (P).

## Patentansprüche

1. Selbstangetriebene Einwickelmaschine (1), die auf einer Auflageebene (P) bewegbar ist, um eine Ladung mit einer Kunststofffolie zu umhüllen, aufweisend:
- einen selbstangetriebenen Wagen (2), der mit mindestens einem Antriebsrad (5) versehen ist, ausgebildet zum Bewegen der selbstangetriebenen Einwickelmaschine (1);
- mindestens ein Lenkrad (6), das durch Lenkmittel (8) gesteuert wird, die manuell durch eine Manövrierstange (9) oder durch ein Fühlerelement (19), das ausgebildet ist, Außenwänden der zu umhüllenden Ladung zu folgen, bedienbar sind;
- einen Pfosten (3), der an dem Wagen (2) befestigt ist und eine Abwickeleinheit (4), die mit mindestens einer Rolle (51) Folie versehen ist, verschiebbar trägt;
- mindestens eine Hebevorrichtung (10), die ein mit einem leerlaufenden Hilfsrad (12) versehenes Tragelement (11) beinhaltet, wobei das Tragelement (11) dem Wagen (2) zugeordnet und wahlweise zwischen einer angehobenen Position (A), in der das Hilfsrad (12) von der Auflageebene (P) beabstandet ist, und einer abgesenkten Position (B), in der das Hilfsrad (12) an der Auflageebene (P) anliegt und das Antriebsrad (5) anhebt und von der Auflageebene (P) löst, bewegbar ist;
wobei das Tragelement (11) drehbar einer Seite (2a) des Wagens (2) zugeordnet ist, die an das Antriebsrad (5) angrenzt, so dass es sich zwischen der angehobenen Position (A) und der abgesenkten Position (B) drehen kann;
**dadurch gekennzeichnet, dass** die Hebevorrichtung (10) aufweist:
- einen von dem Wagen (2) drehbar gelagerten Hebel (13), der mit dem Tragelement (11) verbunden und zwischen einer Nichtbetriebsposition (C), in der der Hebel (13) das Tragelement (12) in der angehobenen Position (A) anordnet, und einer Betriebsposition (D), in der der Hebel (13) das Tragelement (12) in der abgesenkten Position (B) anordnet, beweglich ist; und
- ein Verbindungselement (14), das ausgebildet ist, den Hebel (13) und das Tragelement (11) zu verbinden.

2. Selbstangetriebene Einwickelmaschine (1) nach Anspruch 1, wobei der Hebel (13) eine längliche Form besitzt und einen ersten Abschnitt (13a) zum Greifen, der ausgebildet ist, von einem Bediener ergriffen werden zu können, und einen zweiten Abschnitt (13b) zum Betätigen, der mit dem Tragelement (11) verbunden ist, besitzt, wobei der Hebel (13) drehbar mit dem Wagen (2) verbunden ist und von diesem an einem Drehpunkt (15) getragen wird, der zwischen dem ersten Abschnitt (13a) und dem zweiten Abschnitt (13b) angeordnet ist.

3. Selbstangetriebene Einwickelmaschine (1) nach Anspruch 2, wobei der erste Abschnitt (13a) zum Greifen eine Länge besitzt, die länger ist als die Länge des zweiten Abschnitts (13b) zum Betätigen.

4. Selbstangetriebene Einwickelmaschine (1) nach Anspruch 2 oder 3, wobei das Verbindungselement (14) ein erstes Ende (14a), das drehbar mit einem Ende des zweiten Abschnitts (13b) zum Betätigen des Hebels (13) verbunden ist, und ein gegenüberliegendes zweites Ende (14b), das drehbar mit dem Tragelement (11) verbunden ist, aufweist.

5. Selbstangetriebene Einwickelmaschine (1) nach einem der vorhergehenden Ansprüche, wobei das Verbindungselement (14) eine längliche Form besitzt und in der Länge verstellbar ist.

6. Selbstangetriebene Einwickelmaschine (1) nach einem der vorhergehenden Ansprüche, wobei der Hebel (13) mit dem Verbindungselement (14) in der Nichtbetriebsposition (C) einen ersten Winkel (α1) bildet, der zwischen 80° und 100° liegt, und in der Betriebsposition (D) einen zweiten Winkel (α2) bildet, der größer als 180° ist.

7. Selbstangetriebene Einwickelmaschine (1) nach einem der vorhergehenden Ansprüche, wobei die Hebevorrichtung (10) Verriegelungsmittel aufweist, die ausgebildet sind, den Hebel (13) zumindest in der Betriebsposition (D) reversibel zu verriegeln.

8. Selbstangetriebene Einwickelmaschine (1) nach einem der vorhergehenden Ansprüche, wobei der Wagen (2) zwei Antriebsräder (5) und zwei Hebevorrichtungen (10) aufweist, wobei jede Hebevorrichtung einem jeweiligen Antriebsrad (5) zugeordnet ist, um das Antriebsrad von der Auflageebene (P) anzuheben und zu lösen.

## Revendications

1. Enveloppeuse automotrice (1) mobile sur une surface de support (P) pour envelopper une charge avec un film plastique, comprenant :
- un chariot automoteur (2) muni d'au moins une roue motrice (5) adaptée pour déplacer ladite enveloppeuse automotrice (1) ;
- au moins une roue directrice (6) commandée par des moyens de direction (8) qui peuvent être actionnés manuellement par une barre de manœuvre (9) ou par un élément palpeur (19) approprié pour suivre des parois externes de la charge à envelopper ;
- un montant (3) fixé audit chariot (2) et supportant de manière coulissante une unité de déroulement (4) munie d'au moins une bobine (51) de film ;
- au moins un dispositif de levage (10) qui comporte un élément de support (11) pourvu d'une roue auxiliaire (12) inactive, ledit élément de support (11) étant associé audit chariot (2) et pouvant être sélectivement déplacé entre une position relevée (A), dans laquelle ladite roue auxiliaire (12) est espacée dudit plan de support (P), et une position abaissée (B), dans laquelle ladite roue auxiliaire (12) vient en butée contre ledit plan de support (P) et soulève et détache ladite roue motrice (5) dudit plan de support (P) ;
dans laquelle ledit élément de support (11) est associé en rotation à un côté (2a) dudit chariot (2), adjacent à ladite roue motrice (5) de manière à tourner entre ladite position relevée (A) et ladite position abaissée (B) ;
**caractérisée en ce que** ledit dispositif de levage (10) comprend :
- un levier (13) supporté en rotation par ledit chariot (2), relié audit élément de support (11) et mobile entre une position de non-fonctionnement (C), dans laquelle ledit levier (13) dispose ledit élément de support (12) dans la position relevée (A), et une position de fonctionnement (D), dans laquelle ledit levier (13) dispose ledit élément de support (12) dans la position abaissée (B) ; et
- un élément de liaison (14) approprié pour relier ledit levier (13) et ledit élément de support (11).

2. Enveloppeuse automotrice (1) selon la revendication 1, dans laquelle ledit levier (13) a une forme allongée et a une première portion de préhension (13a) adaptée pour être saisie par un opérateur et une seconde portion de fonctionnement (13b) qui est reliée audit élément de support (11), ledit levier (13) étant relié en rotation audit chariot (2), et supporté par celui-ci, au niveau d'un point de pivot (15) qui est interposé entre ladite première portion (13a) et ladite seconde portion (13b).

3. Enveloppeuse automotrice (1) selon la revendication 2, dans laquelle ladite première portion de préhension (13a) a une longueur plus longue que la longueur de ladite seconde portion de fonctionnement (13b).

4. Enveloppeuse automotrice (1) selon la revendication 2 ou 3, dans laquelle ledit élément de liaison (14) comprend une première extrémité (14a) reliée en rotation à une extrémité de ladite seconde portion de fonctionnement (13b) dudit levier (13) et une seconde extrémité (14b) opposée reliée en rotation audit élément de support (11).

5. Enveloppeuse automotrice (1) selon l'une quelconque des revendications précédentes, dans laquelle ledit élément de liaison (14) a une forme allongée et est réglable en longueur.

6. Enveloppeuse automotrice (1) selon l'une quelconque des revendications précédentes, dans laquelle ledit levier (13) forme un premier angle (α1) avec ledit élément de liaison (14) dans ladite position de non-fonctionnement (C) qui est compris entre 80° et 100° et dans ladite position de fonctionnement (D) forme un second angle (α2) plus large que 180°.

7. Enveloppeuse automotrice (1) selon l'une quelconque des revendications précédentes, dans laquelle ledit dispositif de levage (10) comprend des moyens de verrouillage configurés pour verrouiller de manière réversible ledit levier (13) au moins dans ladite position de fonctionnement (D).

8. Enveloppeuse automotrice (1) selon l'une quelconque des revendications précédentes, dans laquelle ledit chariot (2) comprend deux roues motrices (5) et deux dispositifs de levage (10), chaque dispositif de levage étant associé à une roue motrice (5) respective afin de soulever et détacher ladite roue motrice du plan de support (P).
